# EUROPEAN PATENT SPECIFICATION

(11) **EP 4 276 720 B1**
(45) Date of publication and mention of the grant of the patent: **15.10.2025**
(21) Application number: 22205853.9
(22) Date of filing: 07.11.2022
(51) Int. Cl.: G06Q 10/1093, G06Q 10/10

(54) **PARTICIPANT RECOMMENDATION METHOD AND APPARATUS, ELECTRONIC DEVICE, AND STORAGE MEDIUM**
VERFAHREN UND VORRICHTUNG ZUR TEILNEHMEREMPFEHLUNG, ELEKTRONISCHE VORRICHTUNG UND SPEICHERMEDIUM
PROCÉDÉ ET APPAREIL DE RECOMMANDATION DES PARTICIPANTS, DISPOSITIF ÉLECTRONIQUE ET SUPPORT D'INFORMATIONS

(30) Priority: 13.05.2022 CN 202210523209
(43) Date of publication of application: 15.11.2023
(73) Proprietor: Beijing Baidu Netcom Science and Technology Co., Ltd., Beijing 100085 (CN)
(72) Inventor: WANG, Jiajing, Beijing, 100085 (CN)
(74) Representative: Bringer IP

(56) References cited:
- US-A1- 2020 076 634

## Description

### TECHNICAL FIELD

The present disclosure relates to a field of computer technology, and in particular, to fields of cloud computing, intelligent search and the like.

### BACKGROUND

A user needs to manually add participant information to create an online conference, so as to implement a multi-person conference of the online conference. One way is to manually input participants by the user and search for results matching the input participants, and the other way is to manually input participants one by one by the user. No matter which way is adopted, it might affect efficiency of conference creation, which is not only inefficient but also prone to errors. US 2020/076634 A1 discloses that a new meeting can be created by entering a title (or partial title) in the title field of an electronic invitation template and/or entering text in an agenda field or similar description field of the invitation template, then features are generated from the entered text, then the current features in feature sets are compared to the features from index, and the features deemed sufficiently similar can be used to generate recommendations; furthermore, this capability progressively narrows down recommendation options as the user types. The document, however, fails to disclose matching input and determining conference attributes as claimed.

### SUMMARY

The present disclosure provides a participant recommendation method and apparatus, an electronic device and a storage medium.

According to one aspect of the present disclosure, provided is a participant recommendation method, including: acquiring a conference title, and matching text data in the conference title with a first tag, to extract a conference tag corresponding to the first tag from the text data; acquiring first user information, and matching the first user information with a second tag, to obtain a user tag corresponding to the second tag; and filtering, according to the conference tag and the user tag, participating user information in a candidate set, to obtain second user information for participant recommendation.

According to another aspect of the present disclosure, provided is a participant recommendation apparatus, including: a first matching module configured to acquire a conference title, and match text data in the conference title with a first tag, to extract a conference tag corresponding to the first tag from the text data; a second matching module configured to acquire first user information, and match the first user information with a second tag, to obtain a user tag corresponding to the second tag; and a filtering module configured to filter, according to the conference tag and the user tag, participating user information in a candidate set, to obtain second user information for participant recommendation.

According to another aspect of the present disclosure, provided is an electronic device, including: at least one processor; and a memory connected in communication with the at least one processor; where the memory stores an instruction executable by the at least one processor, and the instruction, when executed by the at least one processor, enables the at least one processor to execute the method of any embodiment of the present disclosure.

According to another aspect of the present disclosure, provided is a non-transitory computer-readable storage medium storing a computer instruction thereon, and the computer instruction is used to cause a computer to execute the method of any embodiment of the present disclosure.

According to another aspect of the present disclosure, provided is a computer program product including a computer program, and the computer program implements the method of any embodiment of the present disclosure, when executed by a processor.

By adopting the present disclosure, the conference title may be acquired, and the text data in the conference title is matched with the first tag, to extract the conference tag corresponding to the first tag from the text data. The first user information may be acquired, and the first user information is matched with the second tag, to obtain a user tag corresponding to the second tag. The participating user information in the candidate set is filtered according to the conference tag and the user tag, to obtain the second user information for the participant recommendation, so that a participant (i.e., the second user information) can be accurately recommended for the first user, and the efficiency of conference creation can be improved.

It should be understood that the content described in this part is not intended to identify critical or essential features of embodiments of the present disclosure, nor is it used to limit the scope of the present disclosure. Other features of the present disclosure will be easily understood through the following description.

### BRIEF DESCRIPTION OF THE DRAWINGS

The accompanying drawings are used to better understand the present solution, and do not constitute a limitation to the present disclosure.
FIG. 1 is a schematic diagram of manually adding a participant in the related art.
FIG. 2 is a schematic flowchart of a participant recommendation method according to the embodiments of the present disclosure.
FIG. 3 is a schematic diagram of displaying recommendation participants in building a conference according to an application example of the embodiments of the present disclosure.
FIG. 4 is a schematic diagram of a weight operation according to an application example of the embodiments of the present disclosure.
FIG. 5 is a schematic diagram of classification and ranking according to an application example of the embodiments of the present disclosure.
FIG. 6 is a structural diagram of a participant recommendation apparatus according to the embodiments of the present disclosure.
FIG. 7 is a block diagram of an electronic device for implementing a participant recommendation method according to the embodiments of the present disclosure.

### DETAILED DESCRIPTION

Hereinafter, descriptions to the exemplary embodiments of the present disclosure are made with reference to the accompanying drawings, include various details of the embodiments of the present disclosure to facilitate understanding, and should be considered as merely exemplary. Therefore, those having ordinary skill in the art should realize, various changes and modifications may be made to the embodiments described herein, without departing from the scope of the present disclosure. Likewise, for clarity and conciseness, descriptions of well-known functions and structures are omitted in the following descriptions.

The term "and/or" herein only describes an association relation of associated objects, which indicates that there may be three kinds of relations, for example, A and/or B may indicate that there is only A exists, or there are both A and B exist, or there is only B exists. The term "at least one" herein indicates any one of many items, or any combination of at least two of the many items, for example, at least one of A, B, or C may indicate any one or more elements selected from a set of A, B, and C. The term "first" and "second" herein indicate a plurality of similar technical terms and use to distinguish them from each other, but do not limit an order of them or limit that there are only two items, for example, a first feature and a second feature indicate two types of features/two features, a quantity of the first feature may be one or more, and a quantity of the second feature may also be one or more.

In addition, in order to better illustrate the present disclosure, numerous specific details are given in the following specific implementations. Those having ordinary skill in the art should be understood that the present disclosure may be performed without certain specific details. In some examples, methods, means, elements and circuits well known to those having ordinary skill in the art are not described in detail, in order to highlight the subject matter of the present disclosure.

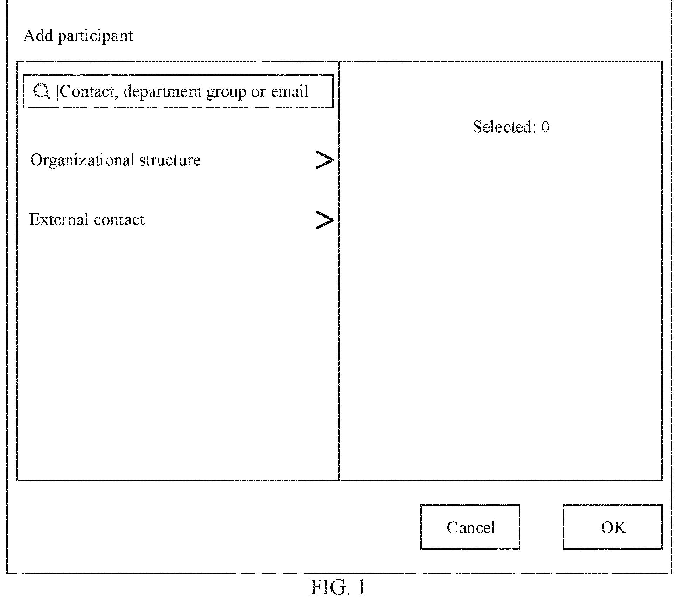

FIG. 1 is a schematic diagram of manually adding a participant in the related art. As shown in FIG. 1, the user needs to manually add participant information when creating an online conference. For example, the user manually inputs the participant information to initiate the name search service corresponding to the participant information, and clicks the "OK" button. Alternatively, the user manually inputs the group name, chooses the relevant user in the conversation group, and takes the selected relevant user as the participant information. Although the participant may be obtained by matching the name, or the conversation group where the participant is located may be obtained by matching the group name for the user to choose. Whether the user intends to search the person or search the conversation group may be further judged by analyzing the user's search request, and the relevant search result may be returned, it is required the user to manually input information, which is inefficient.

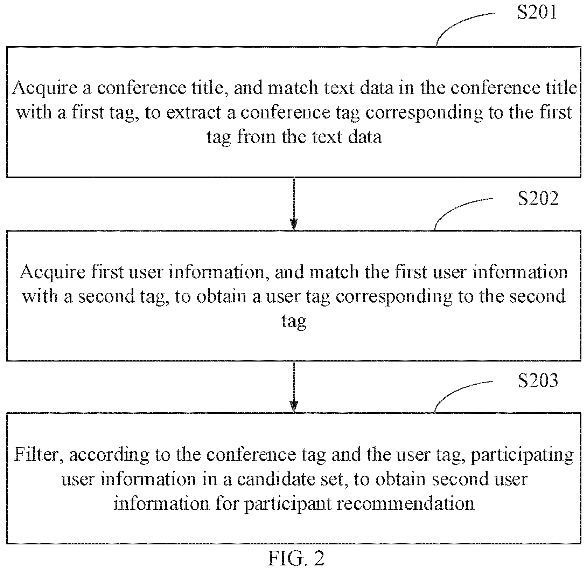

According to the embodiments of the present disclosure, a participant recommendation method is provided, and FIG. 2 is a schematic flowchart of a participant recommendation method according to the embodiments of the present disclosure. The method may be applied to a participant recommendation apparatus. For example, the apparatus may be deployed in a terminal, a server or other processing device in a single machine, multi-machine or cluster system, and may implement the processing of participant recommendation and the like. The terminal may be a user equipment (UE), a mobile device, a personal digital assistant (PDA), a handheld device, a computing device, an on-board device, a wearable device and the like. In some possible implementations, the method may also be performed by the processor invoking computer-readable instructions stored in the memory. As shown in FIG. 2, the method is applied to any electronic device (e.g., a mobile phone or a desktop computer) and includes the followings.

In S201, a conference title is acquired, and text data in the conference title is matched with a first tag, to extract a conference tag corresponding to the first tag from the text data.

In S202, first user information is acquired, and the first user information is matched with a second tag, to obtain a user tag corresponding to the second tag.

In S203, participating user information in a candidate set is filtered according to the conference tag and the user tag, to obtain second user information for participant recommendation.

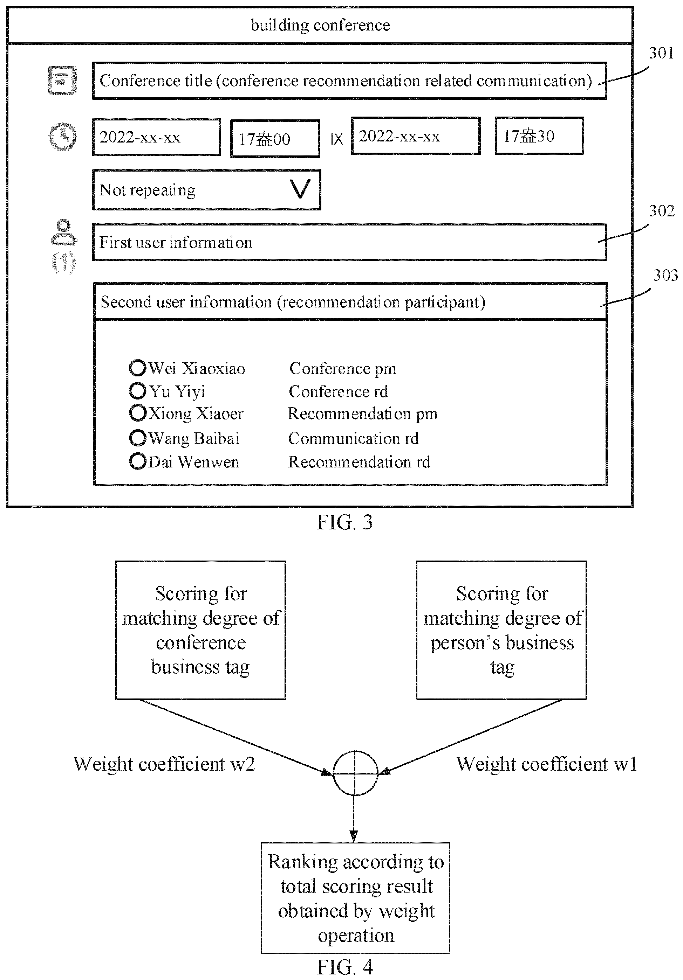

In one example of S201 to S203, as shown in FIG. 3, in building a conference, the conference title 301 (such as conference recommendation related communication) may be acquired by responding to a first input operation. The first tag (i.e., a preset conference related tag) may include a conference type tag and/or a business tag of the conference. The text data in the conference title may be matched with the first tag, thereby extracting a conference tag (e.g., "conference", "recommendation", "communication" and other conference type tags) corresponding to the first tag from the text data. The first user information 302 (i.e., the information of the conference creator, such as the conference initiator "Chen xx") may be acquired by responding to a second input operation. The second tag (i.e., a preset enterprise user portrait tag) may include at least one of: a department tag, a business tag or a position tag. The first user information may be matched with the second tag, thereby obtaining a user tag (e.g., "pm", "rd" and other position tags) corresponding to the second tag. Participating user information in a candidate set is filtered according to the conference tag and the user tag, and the second user information (i.e., the participating recommender and/or the participating recommendation group related to the built conference and the first user information) may be obtained finally. Specifically, as shown in FIG. 3, the second user information 303 includes: a participating recommender related to the first user information. In an example, except for displaying the name of the participating recommender, such as Wei Xiaoxiao, Yu Yiyi, Xiong Xiaoer, Wang Baibai and Dai Wenwen, the first tag (conference type tag) and/or the second tag (position tag) corresponding to the participating recommender may also be displayed.

By adopting the present disclosure, the conference title is acquired, and the text data in the conference title is matched with the first tag, to extract the conference tag corresponding to the first tag from the text data. The first user information is acquired, and the first user information is matched with the second tag, to obtain the user tag corresponding to the second tag. The participating user information in the candidate set is filtered according to the conference tag and the user tag, to obtain the second user information for participant recommendation, so that the participant (i.e., the second user information) can be accurately recommended for the first user, and the efficiency of conference creation can be improved.

In one implementation, matching the text data in the conference title with the first tag to extract the conference tag corresponding to the first tag from the text data includes: matching the text data in the conference title with the first tag, determining that the matching is successful, in the case where there is first text data in the text data being the same as the first tag, and determining the first text data as the conference tag.

In some examples, the above first tag may be pre-configured, so as to perform match directly when building the conference. The first tag is used to characterize a conference type and/or a business type to which a participant in the conference pertains. In an example, the conference type includes at least one of: a regular meeting, a review meeting, a sharing training meeting, a project initiation meeting, a discussion alignment meeting or a summary review meeting. The business type to which the participant in the conference pertains includes: the type of business in which the user is engaged.

For example, if the first text data in the text data is a "discussion alignment conference" and the first tag is also a "discussion alignment conference", it is determined that the matching is successful, in the case where there is the first text data in the text data being the same as the first tag, which means determining that the matching is successful, in the case where the first text data is the same as the first tag. Therefore, by adopting the present implementation, it can ensure the matching of being exactly the same as the first tag, and thus it may not only be achieved the purpose of matching, but also to improve the matching accuracy. Further, data support can be provided for the subsequent recommendation of the second user information.

In one implementation, matching the text data in the conference title with the first tag to extract the conference tag corresponding to the first tag from the text data includes: matching the text data in the conference title with the first tag, determining that the matching is successful, in the case where second text data in the text data has the same keyword as the first tag, and determining the second text data as the conference tag.

In some examples, the above first tag may be pre-configured, so as to perform match directly when building the conference. The first tag is used to characterize a conference type and/or a business type to which a participant in the conference pertains. In an example, the conference type includes at least one of: a regular meeting, a review meeting, a sharing training meeting, a project initiation meeting, a discussion alignment meeting or a summary review meeting. The business type to which the participant in the conference pertains includes: the type of business in which the user is engaged.

For example, if the second text data in the text data is "review" and the first tag is also "summary review meeting", it is determined that the matching is successful, in the case where the second text data in the text data has the same keywords as the first tag, which means determining that the matching is successful, in the case where the second text data has the same keyword "review" as the first tag. Therefore, by adopting the present implementation, the purpose of matching can also be achieved by adopting the matching of partial keywords. Further, data support can be provided for the subsequent recommendation of the second user information.

In one implementation, matching the first user information with the second tag to obtain the user tag corresponding to the second tag includes: matching the first user information with the second tag, determining that the matching is successful, in the case where the first user information pertains to the user attribute characterized by the second tag, and determining the user attribute to which the first user information pertains as the user tag.

In some examples, the above second tag may be pre-configured, so as to perform match directly when building the conference. The second tag is used to characterize a user attribute. In an example, the user attribute includes at least one of: a department attribute of a department to which a user belongs, a business attribute of business in which a user is engaged, or a position attribute of a user. Accordingly, the second tag may include at least one of: a department tag, a business tag, or a position tag. By adopting the present implementation, the purpose of matching in term of user attribute can be achieved by matching with the second tag. Further, data support can be provided for the subsequent recommendation of the second user information.

In one implementation, correlation matching is performed between the conference tag and the user tag, to obtain a user tag that is the same as a conference type and/or business type characterized by the conference tag, and, the participating user information in the candidate set is filtered according to the user tag that is the same as the conference type and/or business type characterized by the conference tag, to obtain the second user information.

In some examples, if the conference type characterized by the conference tag is the director meeting, the business type characterized by the conference tag is the business attribute of the participant (such as "product research and development"), and the user attribute characterized by the user tag is the position attribute of the user (such as "director") and the business attribute of the business in which the user is engaged (such as "product research and development"), the correlation matching is performed between the conference tag and the user tag, to obtain a user tag that is the same as the conference type and the business type characterized by the conference tag.

In some examples, if the conference type characterized by the conference tag is a business review meeting, the participants may be determined through the preliminary filtering of the participants defined by the conference type and then exactly filtered through the business type (such as "product initiation") characterized by the conference tag and the user attribute characterized by the user tag is the business attribute of the business in which the user is engaged (such as "product initiation"), the correlation matching is performed between the conference tag and the user tag, to obtain the user tag that is the same as the business type characterized by the conference tag in the current business review meeting.

In some examples, if the conference type characterized by the conference tag is the communication meeting of the research and development department, and the user attribute characterized by the user tag is the department attribute of the user (such as "research and development department"), the correlation matching is performed between the conference tag and the user tag, to obtain the user tag that is the same as the conference type characterized by the conference tag.

More specifically, for the conference title, since the corresponding second tag is marked for each conference in advance, the text data in the conference title may be analyzed to extract the first tag corresponding to the relevant item in the text data. Specifically, it may be identified whether the conference title includes the conference type tags such as "communication, training, project initiation, discussion, review, and the like". For the first user who creates the conference, since the corresponding second tag is marked for each user in advance, for example, a certain participating user in the candidate set is responsible for the project group of a certain conference application (APP) research and development or for other project groups, the user attribute of the first user may be matched to determine whether the first user and the participating user are in the same project group. Specifically, when matching, the correlation matching is performed between the conference tag and the user tag. Considering that the conference tag may be used to characterize the conference type and the business type to which the participant in the conference pertains, so that the conference in which the participant may participate may be determined by the conference type, and the business type may be determined by the business type to which the participant in the conference pertains. Therefore, by performing the correlation matching between the conference tag and the user tag, the user tag that is the same as the conference type and the business type characterized by the conference tag may be obtained. That is, the user tag with the same business type as the current conference type is obtained, so that the participating user information in the candidate set is filtered according to the user tag that is the same as a conference type and a business type characterized by a conference tag, to obtain the second user information. By adopting the present implementation, the rough filtering of conference associated users may be realized, to obtain the second user information.

In one implementation, the method further includes: performing matching degree scoring on the correlation matching between the conference tag and the user tag, to obtain a first scoring result; reordering, based on the first scoring result, the second user information, to obtain a first ranking result; and displaying, according to the first ranking result, the second user information.

In some examples, after the above second user information is obtained, since user ranking is not involved, the second user information may be preferentially displayed, which is not the most accurate. Therefore, the second user information needs to be reordered. The matching degree scoring may be performed on the correlation matching between the conference tag and the user tag, and the second user information may be reordered based on the first scoring result obtained by the scoring result, so as to obtain a first ranking result. By adopting the present implementation, more accurate second user information can be obtained through matching degree scoring.

In one implementation, displaying, according to the first ranking result, the second user information includes: obtaining, according to a cohesion degree between the second user information and the first user information, a first adjustment value; adjusting, according to the first adjustment value, the matching degree scoring, to obtain a second scoring result; updating, based on the second scoring result, the first ranking result, to obtain an updated second ranking result; and displaying, according to the second ranking result, the second user information.

In one implementation, displaying, according to the first ranking result, the second user information includes: obtaining, according to a historical conference in which the second user information and the first user information jointly participate, a second adjustment value; adjusting, according to the second adjustment value, the matching degree scoring, to obtain a second scoring result; updating, based on the second scoring result, the first ranking result, to obtain an updated second ranking result; and displaying, according to the second ranking result, the second user information.

In some examples, there are some possibilities, such as a case that the same score is obtained by the above matching degree scoring or the score is very close. For the above cases, it is impossible to rank accurately based on the first scoring result, and it is necessary to adjust the correlation matching between the conference tag and the user tag. Specifically, the weight of at least one of the conference tag or the user tag may be adjusted. Optionally, in the case where the user tag is a person's business tag, the weight of the person's business tag is adjusted. For example, the weight of the person's business tag is adjusted using a weight coefficient W1, to obtain the first adjustment value, and the weight coefficient W1 is used to characterize the cohesion degree between the second user information and the first user information. Optionally, in the case where the conference tag is a conference business tag, the weight of the conference business tag is adjusted. For example, the weight of the conference business tag is adjusted using a weight coefficient W2, to obtain a second adjustment value, and the weight coefficient W2 is used to characterize the weight of the historical conference in which the second user information and the first user information jointly participate. Finally, reordering is performed after the total scoring result is obtained according to the weight operation. That is, the first ranking result is updated based on the second scoring result, and the updated second ranking result is obtained to display, as shown in FIG. 4. By adopting the present implementation, the fine filtering of conference associated users can be realized.

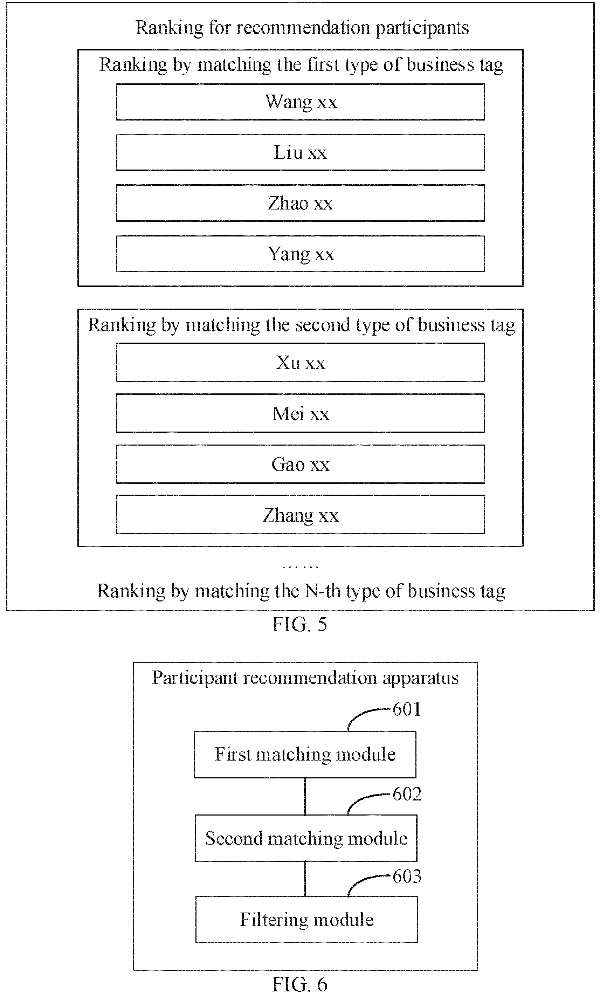

In some examples, if the same type of business tag is used for matching, the information preferentially displayed in the obtained second user information is only matched for the same type of business tag, and the accuracy of recommendation is also affected. Therefore, the ranking result may be further adjusted, to display the user information matched for each type of business tag according to the preset quantity. For example, in the ranking result matched for each type of business tag, only four user information is displayed, as shown in FIG. 5. In the ranking result for the first type of business tag, four user information is displayed, and in the ranking result for the second type of business tag, four user information is also displayed, and so on, until four user information is also displayed in the ranking result of the N-th (N is a positive integer greater than 2) type of business tag. Therefore, a selection range that the second user information corresponds to multiple business tag types is expanded, and it is convenient for the first user who creates the conference. Further, more second user information can be accurately selected in different ranking results of multiple types of business tags.

In some examples, if the recommendation result is selected by the first user, the second user information "selected" in the recommendation result may be used as a new tag, and added to the tag set for subsequent tag matching, thereby continuously and iteratively updating the tag data in the tag set. Further, data support can be provided for better recommending second user information.

In one application example, a solution of participating recommender and/or participating recommendation group in online conference creation is implemented by combining the pre-set tag data (i.e., the first tag and the second tag), text data extraction, tag data matching and ranking, and the solution includes the followings.
1, Pre-set tag data
   1) The establishment of the first tag: taking the enterprise user portrait tag as an example, according to user's work documents, weekly reports and other information in the enterprise, various types of tags required for users in their work are established, and the tags include the following types.
      i, Department tag: a department in which the user is located is determined by the organizational structure of the enterprise, such as the intelligent office platform department.
      ii, Business tag: the business in which the user has recently engaged is established by the user's work information (documents, weekly reports, etc.), and the most frequently occurring word(s) in the work information may be found by word segmentation and reverse arrangement processing of the work information.
         Further, through the joint collaborative relationship of multiple users (frequent conversations, in the same group, one meeting together) for accurate positioning, the top 3 words with the highest scores in the top 10 words may be used as the user's business tag (such as search).
      iii, position tag: a position in an enterprise, such as producer, research personnel, designer, manager, administration, finance, legal affairs, and the like.
         The mapping relationship words corresponding to each position tag may be established, to obtain a position mapping table such as a mapping table between product requirement document, competitive product research and analysis and product, a mapping table between technical solution, system stability design and research and development, and the like. By associating the words frequently appearing in the above work information with the position mapping table, the quantity of words for each position tag in the position mapping table is calculated. The total score is calculated according to the relevant word for each position and the quantity thereof, and the relevant word with the highest score is used as the position tag of the user.
   2) The establishment of the second tag, taking the online conference type tag as an example, by means of the extraction of the online conference types, various tags required is established, and the tags include the following types.
      i, Conference type tag: including a regular meeting, a review meeting (requirement review, technical review, interactive visual review), a sharing training meeting, a project initiation meeting, a discussion alignment meeting, a summary review meeting, and the like.
      ii, Business type tag of the conference: pertaining to the same tag system with the business tag in the above enterprise user portrait tag, and the business type tag of the current conference may be obtained through text similarity matching.
2, Text data extraction, tag data matching and ranking
   1) By means of text data extraction and tag data matching, the conference type tag corresponding to the text data in the conference title may be obtained, and the matching may also be performed based on a regulation whether the text data contains specific keywords (for example, a conference containing "alignment", "communication" and "discussion" may be matched to the conference type tag "discussion alignment meeting"). Therefore, a conference type tag matched with the text data in the conference title may be obtained based on the conference title. Except for the conference type tag, the business tag of the conference may also be obtained from the tag data matching.
   2) Rough matching of conference associated users may be matched based on the business tag of the conference, and the participating recommender and/or the participating recommendation group with the same business tag as the current conference may be associated with the business tag of the conference. The rough matching of conference associated users may also be matched based on the conference type.
      Further, the priority of user tags (such as position tags) associated with each conference type may be ranked and updated regularly based on historical conference characteristics. For example, for the requirement review meeting type, the priority of position tags is: producer (builder) > manager > research personnel = tester = designer > other, so that the users with rear position tags may be removed through the conference type, and the recommended users is ranked first.
   3) The fine matching and ranking of conference associated users may be used to perform matching degree scoring. For example, the matching degree scoring is performed according to the matching degree of the conference business tag and the matching degree of person's business tags. For the participating recommenders, the higher the scoring result, the higher the score. For the participating recommendation group, the similarity of the business tags of all members in the conversation is calculated to obtain a comprehensive scoring result.
      Further, the above scoring result may be adjusted by the weight coefficient, and the selection basis of the weight coefficient includes at least one of the following ways.
      i, Group members history conference scoring: the group members match the historical conference titles, and the higher the similarity, the higher the scoring of the conference participants.
      ii, Group members cohesion degree scoring: users with high group members cohesion degree are calculated by the conversation frequency of group members in the conversation and whether they are in the same department, and the higher the cohesion degree, the higher the scoring. The cohesion degree of the participants in the conversation and the quantity of times the user speaks in the conversation are used to calculate the cohesion degree between the user and the conversation, and the higher the cohesion degree, the higher the scoring.
      iii, Diversity ranking: among the results with approximate difference in ranking scores, four users or group chats with the same user tag are displayed disconsecutively. For example, if there are 4 recommendation rd scores that are relatively close, the user or group chat with other user tags is inserted in the fourth position.

Finally, the recommendation participants and/or the participating recommendation groups are displayed based on the ranking result obtained by the above scoring. That is, after the user inputs the conference title, a participant box is clicked to recommend participants/groups to the user for selection by the user. The participant selected by the user is filled in a participant information box.

According to the embodiments of the present disclosure, a participant recommendation apparatus is provided. FIG. 6 is a structural diagram of a participant recommendation apparatus according to the embodiments of the present disclosure. As shown in FIG. 6, the participant recommendation apparatus includes: a first matching module 601 configured to acquire a conference title, and match text data in the conference title with a first tag, to extract a conference tag corresponding to the first tag from the text data; a second matching module 602 configured to acquire first user information, and match the first user information with a second tag, to obtain a user tag corresponding to the second tag; and a filtering module 603 configured to filter, according to the conference tag and the user tag, participating user information in a candidate set, to obtain second user information for participant recommendation.

In one implementation, the apparatus further includes: a first configuration module configured to pre-configure the first tag, where the first tag is used to characterize a conference type and/or a business type to which a participant in a conference pertains.

In one implementation, the conference type includes at least one of: a regular meeting, a review meeting, a sharing training meeting, a project initiation meeting, a discussion alignment meeting or a summary review meeting. The business type to which the participant in the conference pertains includes: the type of business in which the user is engaged.

In one implementation, the first matching module 601 is configured to match the text data in the conference title with the first tag, determine that the matching is successful, in the case where there is first text data in the text data being the same as the first tag, and determine the first text data as the conference tag.

In one implementation, the first matching module 601 is configured to match the text data in the conference title with the first tag, determine that the matching is successful, in the case where second text data in the text data has the same keyword as the first tag, and determine the second text data as the conference tag.

In one implementation, the apparatus further includes a second configuration module configured to pre-configure the second tag, and the second tag is used to characterize a user attribute.

In one implementation, the user attribute includes at least one of: a department attribute of a department to which a user belongs, a business attribute of business in which a user is engaged, or a position attribute of a user.

In one implementation, the second matching module 602 is configured to match the first user information with the second tag, determine that the matching is successful, in the case where the first user information pertains to the user attribute characterized by the second tag, and determine the user attribute to which the first user information pertains as the user tag.

In one implementation, the filtering module 603 is configured to: perform correlation matching between the conference tag and the user tag, to obtain a user tag that is the same as a conference type and/or business type characterized by the conference tag; and filter, according to the user tag that is the same as the conference type and business type characterized by the conference tag, the participating user information in the candidate set, to obtain the second user information.

In one implementation, the apparatus further includes a first processing module, and the first processing module is configured to: perform matching degree scoring on the correlation matching between the conference tag and the user tag, to obtain a first scoring result; reorder, based on the first scoring result, the second user information, to obtain a first ranking result; and display, according to the first ranking result, the second user information.

In one implementation, the first processing module is configured to: obtain, according to a cohesion degree between the second user information and the first user information, a first adjustment value; adjust, according to the first adjustment value, the matching degree scoring, to obtain a second scoring result; update, based on the second scoring result, the first ranking result, to obtain an updated second ranking result; and display, according to the second ranking result, the second user information.

In one implementation, the first processing module is configured to: obtain, according to a historical conference in which the second user information and the first user information jointly participate, a second adjustment value; adjust, according to the second adjustment value, the matching degree scoring, to obtain a second scoring result; update, based on the second scoring result, the first ranking result, to obtain an updated second ranking result; and display, according to the second ranking result, the second user information.

In the technical solution of the present disclosure, the acquisition, storage and application of the user's personal information involved are all in compliance with the provisions of relevant laws and regulations, and do not violate public order and good customs.

According to the embodiments of the present disclosure, the present disclosure also provides an electronic device, a readable storage medium and a computer program product.

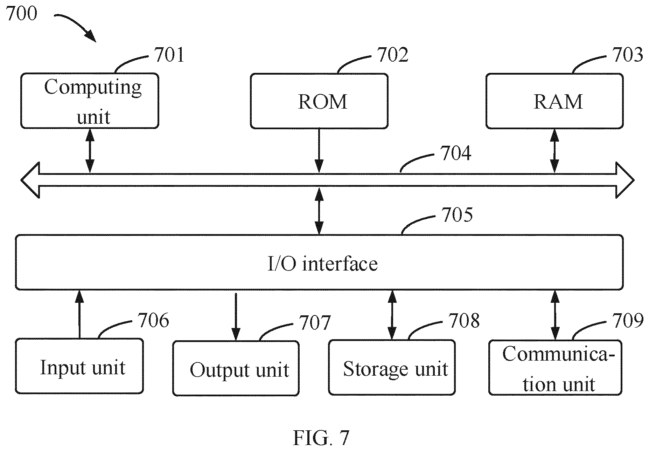

FIG. 7 shows a schematic block diagram of an example electronic device 700 that may be used to implement the embodiments of the present disclosure. The electronic device is intended to represent various forms of digital computers, such as a laptop, a desktop, a workstation, a personal digital assistant, a server, a blade server, a mainframe computer, and other suitable computers. The electronic device may also represent various forms of mobile devices, such as a personal digital processing, a cellular phone, a smart phone, a wearable device and other similar computing devices. The components shown herein, their connections and relationships, and their functions are merely examples, and are not intended to limit the implementation of the present disclosure described and/or required herein.

As shown in FIG. 7, the electronic device 700 includes a computing unit 701 that may perform various appropriate actions and processes according to a computer program stored in a Read-Only Memory (ROM) 702 or a computer program loaded from a storage unit 708 into a Random Access Memory (RAM) 703. Various programs and data required for an operation of the electronic device 700 may also be stored in RAM 703. The computing unit 701, the ROM 702 and the RAM 703 are connected to each other through a bus 704. The input/output (I/O) interface 705 is also connected to the bus 704.

A plurality of components in the electronic device 700 are connected to the I/O interface 705, and include an input unit 706 such as a keyboard, a mouse, or the like; an output unit 707 such as various types of displays, speakers, or the like; the storage unit 708 such as a magnetic disk, an optical disk, or the like; and a communication unit 709 such as a network card, a modem, a wireless communication transceiver, or the like. The communication unit 709 allows the electronic device 700 to exchange information/data with other devices through a computer network such as the Internet and/or various telecommunication networks.

The computing unit 701 may be various general-purpose and/or special-purpose processing components with processing and computing capabilities. Some examples of the computing unit 701 include, but are not limited to, a Central Processing Unit (CPU), a Graphics Processing Unit (GPU), various dedicated Artificial Intelligence (AI) computing chips, various computing units that run machine learning model algorithms, a Digital Signal Processor (DSP), and any appropriate processors, controllers, microcontrollers, or the like. The computing unit 701 performs various methods and processing described above, such as the above participant recommendation method. For example, in some implementations, the above participant recommendation method may be implemented as a computer software program tangibly contained in a computer-readable medium, such as the storage unit 708. In some implementations, a part or all of the computer program may be loaded and/or installed on the electronic device 700 via the ROM 702 and/or the communication unit 709. When the computer program is loaded into RAM 703 and executed by the computing unit 701, one or more steps of the participant recommendation method described above may be performed. Alternatively, in other implementations, the computing unit 701 may be configured to perform the above participant recommendation method by any other suitable means (e.g., by means of firmware).

Various implements of the system and technologies described above herein may be implemented in a digital electronic circuit system, an integrated circuit system, a Field Programmable Gate Array (FPGA), an Application Specific Integrated Circuit (ASIC), Application Specific Standard Parts (ASSP), a System on Chip (SOC), a Complex Programmable Logic Device (CPLD), a computer hardware, firmware, software, and/or a combination thereof. These various implementations may be implemented in one or more computer programs, and the one or more computer programs may be executed and/or interpreted on a programmable system including at least one programmable processor. The programmable processor may be a special-purpose or general-purpose programmable processor, may receive data and instructions from a storage system, at least one input device, and at least one output device, and transmit the data and the instructions to the storage system, the at least one input device, and the at least one output device.

The program code for implementing the method of the present disclosure may be written in any combination of one or more programming languages. The program code may be provided to a processor or controller of a general-purpose computer, a special-purpose computer or other programmable data processing devices, which enables the program code, when executed by the processor or controller, to cause the function/operation specified in the flowchart and/or block diagram to be implemented. The program code may be completely executed on a machine, partially executed on the machine, partially executed on the machine as a separate software package and partially executed on a remote machine, or completely executed on the remote machine or a server.

In the context of the present disclosure, a machine-readable medium may be a tangible medium, which may contain or store a procedure for use by or in connection with an instruction execution system, device or apparatus. The machine-readable medium may be a machine-readable signal medium or a machine-readable storage medium. The machine-readable medium may include, but is not limited to, an electronic, magnetic, optical, electromagnetic, infrared or semiconductor system, device or apparatus, or any suitable combination thereof. More specific examples of the machine-readable storage medium may include electrical connections based on one or more lines, a portable computer disk, a hard disk, a Random Access Memory (RAM), a Read-Only Memory (ROM), an Erasable Programmable Read-Only Memory (EPROM or a flash memory), an optical fiber, a portable Compact Disc Read-Only Memory (CD-ROM), an optical storage device, a magnetic storage device, or any suitable combination thereof.

In order to provide interaction with a user, the system and technologies described herein may be implemented on a computer that has: a display apparatus (e.g., a cathode ray tube (CRT) or a Liquid Crystal Display (LCD) monitor) for displaying information to the user; and a keyboard and a pointing device (e.g., a mouse or a trackball) through which the user may provide input to the computer. Other types of devices may also be used to provide interaction with the user. For example, feedback provided to the user may be any form of sensory feedback (e.g., visual feedback, auditory feedback, or tactile feedback), and the input from the user may be received in any form (including an acoustic input, a voice input, or a tactile input).

The system and technologies described herein may be implemented in a computing system (which serves as, for example, a data server) including a back-end component, a computing system (which serves as, for example, an application server) including a middleware, or in a computing system including a front-end component (e.g., a user computer with a graphical user interface or web browser through which the user may interact with the implementations of the system and technologies described herein), or in a computing system including any combination of the back-end component, the middleware component, or the front-end component. The components of the system may be connected to each other through any form or kind of digital data communication (e.g., a communication network). Examples of the communication network include a Local Area Network (LAN), a Wide Area Network (WAN), and the Internet.

A computer system may include a client and a server. The client and server are generally far away from each other and usually interact with each other through a communication network. A relationship between the client and the server is generated by computer programs running on corresponding computers and having a client-server relationship with each other. The server may be a cloud server, a distributed system server, or a blockchain server.

It should be understood that, the steps may be reordered, added or removed by using the various forms of the flows described above. For example, the steps recorded in the present disclosure can be performed in parallel, in sequence, or in different orders, as long as a desired result of the technical scheme disclosed in the present disclosure can be achieved, which is not limited herein.

## Claims

1. A computer-implemented participant recommendation method comprising:
acquiring (S201), by a participant recommendation apparatus, a conference title, by responding to a first input operation, and matching text data in the conference title with a first tag, to extract a conference tag that matches the first tag from the text data, comprising one of:
matching the text data in the conference title with the first tag, determining that the matching is successful, in a case of there is first text data in the text data being a same as the first tag, and determining the first text data as the conference tag, or
matching the text data in the conference title with the first tag, determining that the matching is successful, in a case of second text data in the text data has a same keyword as the first tag, and determining the second text data as the conference tag;
wherein the first tag is pre-configured and is used to characterize at least one of a conference type to which a participant in a conference pertains and a business type to which the participant in the conference pertains;
acquiring (S202), by the participant recommendation apparatus, first user information, by responding to a second input operation, and matching the first user information with a second tag, to obtain a first user tag that matches the second tag, comprising:
matching the first user information with the second tag, determining that the matching is successful, in a case of the first user information pertains to a user attribute **characterized by** the second tag, and determining the user attribute to which the first user information pertains as the first user tag;
wherein the second tag is pre-configured and is used to characterize the user attribute, and the user attribute comprises at least one of: a department attribute of a department to which a user belongs, a business attribute of business in which a user is engaged, or a position attribute of a user;
performing, by the participant recommendation apparatus, correlation matching between the conference tag and the first user tag, to obtain a second user tag that is a same as at least one of a conference type **characterized by** the conference tag and a business type **characterized by** the conference tag, comprising one of:
determining a position attribute and business attribute **characterized by** the first user tag as the second user tag, in a case of the position attribute and business attribute **characterized by** the first user tag have a same keyword as a conference type and business type **characterized by** the conference tag respectively,
determining a business attribute **characterized by** the first user tag as the second user tag, in a case of the business attribute **characterized by** the first user tag has a same keyword as a business type **characterized by** the conference tag, or
determining a department attribute **characterized by** the first user tag as the second user tag, in a case of the department attribute **characterized by** the first user tag has a same keyword as a conference type **characterized by** the conference tag; and
filtering (S203), by the participant recommendation apparatus, according to the second user tag, participating user information in a candidate set, to obtain second user information for participant recommendation.

2. The method of claim 1, further comprising:
performing matching degree scoring on the correlation matching between the conference tag and the second user tag, to obtain a first scoring result;
reordering, based on the first scoring result, the second user information, to obtain a first ranking result; and
displaying, according to the first ranking result, the second user information.

3. The method of claim 2, wherein displaying, according to the first ranking result, the second user information comprises:
obtaining, according to a cohesion degree between the second user information and the first user information, a first adjustment value;
adjusting, according to the first adjustment value, the matching degree scoring, to obtain a second scoring result;
updating, based on the second scoring result, the first ranking result, to obtain an updated second ranking result; and
displaying, according to the second ranking result, the second user information.

4. The method of claim 2 or 3, wherein displaying, according to the first ranking result, the second user information, comprises:
obtaining, according to a historical conference in which the second user information and the first user information jointly participate, a second adjustment value;
adjusting, according to the second adjustment value, the matching degree scoring, to obtain a second scoring result;
updating, based on the second scoring result, the first ranking result, to obtain an updated second ranking result; and
displaying, according to the second ranking result, the second user information.

5. A participant recommendation apparatus comprising:
a first matching module (601) configured to acquire a conference title, by responding to a first input operation, and match text data in the conference title with a first tag, to extract a conference tag that matches the first tag from the text data, by one of:
matching the text data in the conference title with the first tag, determining that the matching is successful, in a case of there is first text data in the text data being a same as the first tag, and determining the first text data as the conference tag, or
matching the text data in the conference title with the first tag, determining that the matching is successful, in a case of second text data in the text data has a same keyword as the first tag, and determining the second text data as the conference tag;
wherein the first tag is pre-configured and is used to characterize at least one of a conference type to which a participant in a conference pertains and a business type to which the participant in the conference pertains;
a second matching module (602) configured to acquire first user information, by responding to a second input operation, and match the first user information with a second tag, to obtain a first user tag that matches the second tag, by:
matching the first user information with the second tag, determining that the matching is successful, in a case of the first user information pertains to a user attribute **characterized by** the second tag, and determining the user attribute to which the first user information pertains as the first user tag;
wherein the second tag is pre-configured and is used to characterize the user attribute, and the user attribute comprises at least one of: a department attribute of a department to which a user belongs, a business attribute of business in which a user is engaged, or a position attribute of a user; and
a filtering module (603) configured to perform correlation matching between the conference tag and the first user tag, to obtain a second user tag that is a same as at least one of a conference type **characterized by** the conference tag and a business type **characterized by** the conference tag, by one of:
determining a position attribute and business attribute **characterized by** the first user tag as the second user tag, in a case of the position attribute and business attribute **characterized by** the first user tag have a same keyword as a conference type and business type **characterized by** the conference tag respectively,
determining a business attribute **characterized by** the first user tag as the second user tag, in a case of the business attribute **characterized by** the first user tag has a same keyword as a business type **characterized by** the conference tag, or
determining a department attribute **characterized by** the first user tag as the second user tag, in a case of the department attribute **characterized by** the first user tag has a same keyword as a conference type **characterized by** the conference tag;
wherein the filtering module (603) is further configured to filter, according to the second user tag, participating user information in a candidate set, to obtain second user information for participant recommendation.

6. The apparatus of claim 5, further comprising a first processing module configured to:
perform matching degree scoring on the correlation matching between the conference tag and the second user tag, to obtain a first scoring result;
reorder, based on the first scoring result, the second user information, to obtain a first ranking result; and
display, according to the first ranking result, the second user information.

7. The apparatus of claim 6, wherein the first processing module is further configured to:
obtain, according to a cohesion degree between the second user information and the first user information, a first adjustment value;
adjust, according to the first adjustment value, the matching degree scoring, to obtain a second scoring result;
update, based on the second scoring result, the first ranking result, to obtain an updated second ranking result; and
display, according to the second ranking result, the second user information.

8. The apparatus of claim 6 or 7, wherein the first processing module is further configured to:
obtain, according to a historical conference in which the second user information and the first user information jointly participate, a second adjustment value;
adjust, according to the second adjustment value, the matching degree scoring, to obtain a second scoring result;
update, based on the second scoring result, the first ranking result, to obtain an updated second ranking result; and
display, according to the second ranking result, the second user information.

9. A non-transitory computer-readable storage medium storing a computer instruction thereon, wherein the computer instruction is used to cause a computer to execute the method of any one of claims 1 to 4.

10. A computer program product comprising a computer program, wherein the computer program implements the method of any one of claims 1 to 4, when executed by a processor.

## Patentansprüche

1. Computerimplementiertes Teilnehmerempfehlungsverfahren, umfassend:
Erfassen (S201), durch eine Teilnehmerempfehlungsvorrichtung, eines Konferenztitels, indem sie auf eine erste Eingabeoperation antwortet, und Abgleichen von Textdaten im Konferenztitel mit einem ersten Tag, um ein Konferenz-Tag, das mit dem ersten Tag übereinstimmt, aus den Textdaten zu extrahieren, umfassend eines von Folgendem:
Abgleichen der Textdaten im Konferenztitel mit dem ersten Tag, Bestimmen, dass das Abgleichen erfolgreich ist, falls erste Textdaten in den Textdaten identisch mit dem ersten Tag sind, und Bestimmen der ersten Textdaten als Konferenz-Tag, oder
Abgleichen der Textdaten im Konferenztitel mit dem ersten Tag, Bestimmen, dass das Abgleichen erfolgreich ist, falls zweite Textdaten in den Textdaten dasselbe Schlüsselwort wie das erste Tag aufweisen, und Bestimmen der zweiten Textdaten als Konferenz-Tag;
wobei das erste Tag vorkonfiguriert ist und verwendet wird, um mindestens einen von einem Konferenztyp, zu dem ein Teilnehmer einer Konferenz gehört, und einem Geschäftstyp, zu dem der Teilnehmer der Konferenz gehört, zu kennzeichnen;
Erfassen (S202), durch die Teilnehmerempfehlungsvorrichtung, erster Benutzerinformationen, indem sie auf eine zweite Eingabeoperation antwortet, und Abgleichen der ersten Benutzerinformationen mit einem zweiten Tag, um ein erstes Benutzer-Tag zu erhalten, das mit dem zweiten Tag übereinstimmt, umfassend:
Abgleichen der ersten Benutzerinformationen mit dem zweiten Tag, Bestimmen, dass das Abgleichen erfolgreich ist, wenn sich die ersten Benutzerinformationen auf ein durch das zweite Tag gekennzeichnetes Benutzerattribut beziehen, und Bestimmen des Benutzerattributs, zu dem die ersten Benutzerinformationen gehören, als erstes BenutzerTag;
wobei das zweite Tag vorkonfiguriert ist und verwendet wird, um das Benutzerattribut zu kennzeichnen, und das Benutzerattribut mindestens eines von Folgendem umfasst:
ein Abteilungsattribut einer Abteilung, zu der ein Benutzer gehört, ein Geschäftsattribut eines Unternehmens, in dem ein Benutzer tätig ist, oder ein Positionsattribut eines Benutzers;
Durchführen eines Korrelationsabgleichs zwischen dem Konferenz-Tag und dem ersten Benutzer-Tag durch die Teilnehmerempfehlungsvorrichtung, um ein zweites Benutzer-Tag zu erhalten, das dasselbe ist wie mindestens eines von einem durch das Konferenz-Tag gekennzeichneten Konferenztyp und einem durch das Konferenz-Tag gekennzeichneten Geschäftstyp, umfassend eines von Folgendem:
Bestimmen eines Positionsattributs und eines Geschäftsattributs, die durch das erste Benutzer-Tag gekennzeichnet sind, als zweites Benutzer-Tag, falls das Positionsattribut und das Geschäftsattribut, die durch das erste Benutzer-Tag gekennzeichnet sind, dasselbe Schlüsselwort wie ein Konferenztyp und ein Geschäftstyp, die jeweils durch das Konferenz-Tag gekennzeichnet sind, aufweisen,
Bestimmen eines durch das erste Benutzer-Tag gekennzeichneten Geschäftsattributs als zweites Benutzer-Tag, wenn das durch das erste Benutzer-Tag gekennzeichnete Geschäftsattribut dasselbe Schlüsselwort wie ein durch das Konferenz-Tag gekennzeichneter Geschäftstyp aufweist, oder Bestimmen eines durch das erste Benutzer-Tag gekennzeichneten Abteilungsattributs als zweites Benutzer-Tag, wenn das durch das erste Benutzer-Tag gekennzeichnete Abteilungsattribut dasselbe Schlüsselwort wie ein durch das Konferenz-Tag gekennzeichneter Konferenztyp aufweist;
und Filtern (S203), durch die Teilnehmerempfehlungsvorrichtung, gemäß dem zweiten Benutzer-Tag, von Teilnehmerbenutzerinformationen in einem Kandidatensatz, um zweite Benutzerinformationen für die Teilnehmerempfehlung zu erhalten.

2. Verfahren nach Anspruch 1, ferner umfassend:
Durchführen einer Übereinstimmungsgradbewertung hinsichtlich der Korrelation zwischen dem Konferenz-Tag und dem zweiten Benutzer-Tag, um ein erstes Bewertungsergebnis zu erhalten;
Neuordnen, basierend auf dem ersten Bewertungsergebnis, der zweiten Benutzerinformationen, um ein erstes Ranking-Ergebnis zu erhalten; und
Anzeigen der zweiten Benutzerinformationen gemäß dem ersten Ranking-Ergebnis.

3. Verfahren nach Anspruch 2, wobei das Anzeigen der zweiten Benutzerinformationen gemäß dem ersten Ranking-Ergebnis Folgendes umfasst:
Erhalten eines ersten Anpassungswerts gemäß einem Kohärenzgrad zwischen den zweiten Benutzerinformationen und den ersten Benutzerinformationen;
Anpassen der Übereinstimmungsradbewertung gemäß dem ersten Anpassungswert, um ein zweites Bewertungsergebnis zu erhalten;
Aktualisieren, basierend auf dem zweiten Bewertungsergebnis, des ersten Ranking-Ergebnisses, um ein aktualisiertes zweites Ranking-Ergebnis zu erhalten; und
Anzeigen der zweiten Benutzerinformationen gemäß dem zweiten Ranking-Ergebnis.

4. Verfahren nach Anspruch 2 oder 3, wobei das Anzeigen der zweiten Benutzerinformationen gemäß dem ersten Ranking-Ergebnis Folgendes umfasst:
Erhalten eines zweiten Anpassungswerts gemäß einer historischen Konferenz, an der die zweiten Benutzerinformationen und die ersten Benutzerinformationen gemeinsam teilnehmen;
Anpassen der Übereinstimmungsradbewertung gemäß dem zweiten Anpassungswert, um ein zweites Bewertungsergebnis zu erhalten;
Aktualisieren, basierend auf dem zweiten Bewertungsergebnis, des ersten Ranking-Ergebnisses, um ein aktualisiertes zweites Ranking-Ergebnis zu erhalten; und
Anzeigen der zweiten Benutzerinformationen gemäß dem zweiten Ranking-Ergebnis.

5. Teilnehmerempfehlungsvorrichtung, umfassend:
ein erstes Abgleichsmodul (601), das so konfiguriert ist, dass es einen Konferenztitel erfasst, indem es auf eine erste Eingabeoperation antwortet, und Textdaten im Konferenztitel mit einem ersten Tag abgleicht, um ein Konferenz-Tag, das mit dem ersten Tag übereinstimmt, aus den Textdaten zu extrahieren, durch eines von Folgendem:
Abgleichen der Textdaten im Konferenztitel mit dem ersten Tag, Bestimmen, dass das Abgleichen erfolgreich ist, falls erste Textdaten in den Textdaten identisch mit dem ersten Tag sind, und Bestimmen der ersten Textdaten als Konferenz-Tag, oder
Abgleichen der Textdaten im Konferenztitel mit dem ersten Tag, Bestimmen, dass das Abgleichen erfolgreich ist, falls zweite Textdaten in den Textdaten dasselbe Schlüsselwort wie das erste Tag aufweisen, und Bestimmen der zweiten Textdaten als Konferenz-Tag;
wobei das erste Tag vorkonfiguriert ist und verwendet wird, um mindestens einen von einem Konferenztyp, zu dem ein Teilnehmer einer Konferenz gehört, und einem Geschäftstyp, zu dem der Teilnehmer der Konferenz gehört, zu kennzeichnen; ein zweites Abgleichmodul (602), das so konfiguriert ist, dass es erste Benutzerinformationen erfasst, indem es auf eine zweite Eingabeoperation antwortet, und die ersten Benutzerinformationen mit einem zweiten Tag abgleicht, um ein erstes Benutzertag, das mit dem zweiten Tag übereinstimmt, zu erhalten, durch:
Abgleichen der ersten Benutzerinformationen mit dem zweiten Tag, Bestimmen, dass das Abgleichen erfolgreich ist, wenn sich die ersten Benutzerinformationen auf ein durch das zweite Tag gekennzeichnetes Benutzerattribut beziehen, und Bestimmen des Benutzerattributs, zu dem die ersten Benutzerinformationen gehören, als erstes Benutzer-Tag;
wobei das zweite Tag vorkonfiguriert ist und verwendet wird, um das Benutzerattribut zu kennzeichnen, und das Benutzerattribut mindestens eines von Folgendem umfasst:
ein Abteilungsattribut einer Abteilung, zu der ein Benutzer gehört, ein Geschäftsattribut eines Unternehmens, in dem ein Benutzer tätig ist, oder ein Positionsattribut eines Benutzers; und
ein Filtermodul (603), das so konfiguriert ist, dass es eine Korrelationsübereinstimmung zwischen dem Konferenz-Tag und dem ersten Benutzer-Tag durchführt, um ein zweites Benutzer-Tag zu erhalten, das mindestens identisch ist mit einem von einem Konferenztyp, der durch das Konferenz-Tag gekennzeichnet ist, und einem Geschäftstyp, der durch das Konferenz-Tag **gekennzeichnet ist, durch** eines von Folgendem:
Bestimmen eines Positionsattributs und eines Geschäftsattributs, die **durch** das erste Benutzer-Tag gekennzeichnet sind, als zweites Benutzer-Tag, falls das Positionsattribut und das Geschäftsattribut, die **durch** das erste Benutzer-Tag gekennzeichnet sind, dasselbe Schlüsselwort wie ein Konferenztyp und ein Geschäftstyp, die jeweils **durch** das Konferenz-Tag gekennzeichnet sind, aufweisen,
Bestimmen eines **durch** das erste Benutzer-Tag gekennzeichneten Geschäftsattributs als zweites Benutzer-Tag, wenn das **durch** das erste Benutzer-Tag gekennzeichnete Geschäftsattribut dasselbe Schlüsselwort wie ein **durch** das Konferenz-Tag gekennzeichneter Geschäftstyp aufweist, oder Bestimmen eines **durch** das erste Benutzer-Tag gekennzeichneten Abteilungsattributs als zweites Benutzer-Tag, wenn das **durch** das erste Benutzer-Tag gekennzeichnete Abteilungsattribut dasselbe Schlüsselwort wie ein **durch** das Konferenz-Tag gekennzeichneter Konferenztyp aufweist;
wobei das Filtermodul (603) ferner so konfiguriert ist, dass es gemäß dem zweiten Benutzer-Tag Teilnehmerbenutzerinformationen in einem Kandidatensatz filtert, um zweite Benutzerinformationen für die Teilnehmerempfehlung zu erhalten.

6. Vorrichtung nach Anspruch 5, ferner umfassend ein erstes Verarbeitungsmodul, das für Folgendes konfiguriert ist:
Durchführen einer Übereinstimmungsgradbewertung der Korrelation zwischen dem Konferenz-Tag und dem zweiten Benutzer-Tag, um ein erstes Bewertungsergebnis zu erhalten;
Neuordnen, basierend auf dem ersten Bewertungsergebnis, der zweiten Benutzerinformationen, um ein erstes Ranking-Ergebnis zu erhalten; und
Anzeigen der zweiten Benutzerinformation gemäß dem ersten Ranking-Ergebnis.

7. Vorrichtung nach Anspruch 6, wobei das erste Verarbeitungsmodul ferner für Folgendes konfiguriert ist:
Erhalten eines ersten Anpassungswerts gemäß einem Kohärenzgrad zwischen den zweiten Benutzerinformationen und den ersten Benutzerinformationen;
Anpassen der Übereinstimmungsradbewertung gemäß dem ersten Anpassungswert, um ein zweites Bewertungsergebnis zu erhalten;
Aktualisieren, basierend auf dem zweiten Bewertungsergebnis, des ersten Ranking-Ergebnisses, um ein aktualisiertes zweites Ranking-Ergebnis zu erhalten; und
Anzeigen der zweiten Benutzerinformation gemäß dem zweiten Ranking-Ergebnis.

8. Vorrichtung nach Anspruch 6 oder 7, wobei das erste Verarbeitungsmodul ferner für Folgendes konfiguriert ist:
Erhalten eines zweiten Anpassungswerts gemäß einer historischen Konferenz, an der die zweiten Benutzerinformationen und die ersten Benutzerinformationen gemeinsam teilnehmen;
Anpassen der Übereinstimmungsradbewertung gemäß dem zweiten Anpassungswert, um ein zweites Bewertungsergebnis zu erhalten;
Aktualisieren, basierend auf dem zweiten Bewertungsergebnis, des ersten Ranking-Ergebnisses, um ein aktualisiertes zweites Ranking-Ergebnis zu erhalten; und
Anzeigen der zweiten Benutzerinformation gemäß dem zweiten Ranking-Ergebnis.

9. Nichtflüchtiges, computerlesbares Speichermedium, auf dem eine Computeranweisung gespeichert ist, wobei die Computeranweisung verwendet wird, um einen Computer dazu zu veranlassen, das Verfahren nach einem der Ansprüche 1 bis 4 auszuführen.

10. Computerprogrammprodukt, das ein Computerprogramm umfasst, wobei das Computerprogramm das Verfahren nach einem der Ansprüche 1 bis 4 implementiert, wenn es von einem Prozessor ausgeführt wird.

## Revendications

1. Procédé de recommandation de participant mis en œuvre par ordinateur comprenant :
l'acquisition (S201), par un appareil de recommandation de participant, d'un titre de conférence, en répondant à une première opération d'entrée, et la mise en correspondance de données de texte dans le titre de conférence avec une première étiquette, pour extraire une étiquette de conférence qui correspond à la première étiquette à partir des données de texte, comprenant une étape parmi :
la mise en correspondance des données de texte dans le titre de conférence avec la première étiquette, la détermination que la mise en correspondance est réussie, dans un cas où il existe des premières données de texte dans les données de texte qui sont identiques à la première étiquette, et la détermination des premières données de texte en tant qu'étiquette de conférence, ou
la mise en correspondance des données texte dans le titre de conférence avec la première étiquette, la détermination que la mise en correspondance est réussie, dans un cas où des secondes données de texte dans les données de texte ont un même mot-clé que la première étiquette, et la détermination des secondes données de texte en tant qu'étiquette de conférence ;
dans lequel la première étiquette est pré-configurée et est utilisée pour caractériser au moins l'un parmi un type de conférence auquel se rapporte un participant à une conférence et un type d'activité professionnelle auquel se rapporte le participant à la conférence ;
l'acquisition (S202), par l'appareil de recommandation de participant, de premières informations utilisateur, en répondant à une seconde opération d'entrée, et la mise en correspondance des premières informations utilisateur avec une seconde étiquette, pour obtenir une première étiquette utilisateur qui correspond à la seconde étiquette, comprenant :
la mise en correspondance des premières informations utilisateur avec la seconde étiquette, la détermination que la mise en correspondance est réussie, dans un cas où les premières informations utilisateur se rapportent à un attribut utilisateur **caractérisé par** la seconde étiquette, et la détermination de l'attribut utilisateur auquel les premières informations utilisateur se rapportent en tant que première étiquette utilisateur ;
dans lequel la seconde étiquette est pré-configurée et est utilisée pour caractériser l'attribut utilisateur, et l'attribut utilisateur comprend au moins l'un parmi : un attribut de service d'un service auquel un utilisateur appartient, un attribut d'activité professionnelle d'une activité professionnelle à laquelle se livre un utilisateur, ou un attribut de fonction d'un utilisateur ;
la réalisation, par l'appareil de recommandation de participant, d'une correspondance de corrélation entre l'étiquette de conférence et la première étiquette utilisateur, pour obtenir une seconde étiquette utilisateur qui est identique à au moins l'un d'un type de conférence **caractérisé par** l'étiquette de conférence et d'un type d'activité professionnelle **caractérisé par** l'étiquette de conférence, comprenant une étape parmi :
la détermination d'un attribut de fonction et d'un attribut d'activité professionnelle **caractérisés par** la première étiquette utilisateur en tant que seconde étiquette utilisateur, dans un cas où l'attribut de fonction et l'attribut d'activité professionnelle **caractérisés par** la première étiquette utilisateur ont un même mot-clé en tant que type de conférence et type d'activité professionnelle caractérisés respectivement par l'étiquette de conférence, la détermination d'un attribut d'activité professionnelle **caractérisé par** la première étiquette utilisateur en tant que seconde étiquette utilisateur, dans un cas où l'attribut d'activité professionnelle **caractérisé par** la première étiquette utilisateur a un même mot-clé en tant que type d'activité professionnelle **caractérisé par** l'étiquette de conférence, ou
la détermination d'un attribut de service **caractérisé par** la première étiquette utilisateur en tant que seconde étiquette utilisateur, dans un cas où l'attribut de service **caractérisé par** la première étiquette utilisateur a un même mot-clé en tant que type de conférence **caractérisé par** l'étiquette de conférence ; et
le filtrage (S203), par l'appareil de recommandation de participant, selon la seconde étiquette utilisateur, d'informations utilisateur de participant dans un ensemble de candidats, pour obtenir de secondes informations utilisateur pour une recommandation de participant.

2. Procédé selon la revendication 1, comprenant en outre :
la réalisation d'une notation de degré de correspondance concernant la correspondance de corrélation entre l'étiquette de conférence et la seconde étiquette utilisateur, pour obtenir un premier résultat de notation ;
la réorganisation, sur la base du premier résultat de notation, des secondes informations utilisateur, pour obtenir un premier résultat de classement ; et
l'affichage, selon le premier résultat de classement, des secondes informations utilisateur.

3. Procédé selon la revendication 2, dans lequel l'affichage, selon le premier résultat de classement, des secondes informations utilisateur comprend :
l'obtention, selon un degré de cohésion entre les secondes informations utilisateur et les premières informations utilisateur, d'une première valeur d'ajustement ;
l'ajustement, selon la première valeur d'ajustement, de la notation de degré de correspondance, pour obtenir un second résultat de notation ;
la mise à jour, sur la base du second résultat de notation, du premier résultat de classement, pour obtenir un second résultat de classement mis à jour ; et
l'affichage, selon le second résultat de classement, des secondes informations utilisateur.

4. Procédé selon la revendication 2 ou 3, dans lequel l'affichage, selon le premier résultat de classement, des secondes informations utilisateur, comprend :
l'obtention, selon une conférence historique à laquelle participent conjointement les secondes informations utilisateur et les premières informations utilisateur, d'une seconde valeur d'ajustement ;
l'ajustement, selon la seconde valeur d'ajustement, de la notation de degré de correspondance, pour obtenir un second résultat de notation ;
la mise à jour, sur la base du second résultat de notation, du premier résultat de classement, pour obtenir un second résultat de classement mis à jour ; et
l'affichage, selon le second résultat de classement, des secondes informations utilisateur.

5. Appareil de recommandation de participant comprenant :
un premier module de mise en correspondance (601) configuré pour acquérir un titre de conférence, en répondant à une première opération d'entrée, et faire correspondre des données de texte dans le titre de conférence avec une première étiquette, pour extraire une étiquette de conférence qui correspond à la première étiquette à partir des données de texte, par une étape parmi :
la mise en correspondance des données de texte dans le titre de conférence avec la première étiquette, la détermination que la mise en correspondance est réussie, dans un cas où il existe des premières données de texte dans les données de texte qui sont identiques à la première étiquette, et la détermination des premières données de texte en tant qu'étiquette de conférence, ou
la mise en correspondance des données texte dans le titre de conférence avec la première étiquette, la détermination que la mise en correspondance est réussie, dans un cas où des secondes données de texte dans les données de texte ont un même mot-clé que la première étiquette, et la détermination des secondes données de texte en tant qu'étiquette de conférence ;
dans lequel la première étiquette est pré-configurée et est utilisée pour caractériser au moins l'un parmi un type de conférence auquel se rapporte un participant à une conférence et un type d'activité professionnelle auquel se rapporte le participant à la conférence ;
un second module de mise en correspondance (602) configuré pour acquérir des premières informations utilisateur, en répondant à une seconde opération d'entrée, et faire correspondre les premières informations utilisateur avec une seconde étiquette, pour obtenir une première étiquette utilisateur qui correspond à la seconde étiquette, par :
la mise en correspondance des premières informations utilisateur avec la seconde étiquette, la détermination que la mise en correspondance est réussie, dans un cas où les premières informations utilisateur se rapportent à un attribut utilisateur **caractérisé par** la seconde étiquette, et la détermination de l'attribut utilisateur auquel les premières informations utilisateur se rapportent en tant que première étiquette utilisateur ;
dans lequel la seconde étiquette est pré-configurée et est utilisée pour caractériser l'attribut utilisateur, et l'attribut utilisateur comprend au moins l'un parmi : un attribut de service d'un service auquel un utilisateur appartient, un attribut d'activité professionnelle d'une activité professionnelle à laquelle se livre un utilisateur, ou un attribut de fonction d'un utilisateur ; et
un module de filtrage (603) configuré pour effectuer une correspondance de corrélation entre l'étiquette de conférence et la première étiquette utilisateur, pour obtenir une seconde étiquette utilisateur qui est identique à au moins l'un d'un type de conférence **caractérisé par** l'étiquette de conférence et d'un type d'activité professionnelle **caractérisé par** l'étiquette de conférence, par une étape parmi :
la détermination d'un attribut de fonction et d'un attribut d'activité professionnelle **caractérisés par** la première étiquette utilisateur en tant que seconde étiquette utilisateur, dans un cas où l'attribut de fonction et l'attribut d'activité professionnelle **caractérisés par** la première étiquette utilisateur ont un même mot-clé en tant que type de conférence et type d'activité professionnelle caractérisés respectivement par l'étiquette de conférence, la détermination d'un attribut d'activité professionnelle **caractérisé par** la première étiquette utilisateur en tant que seconde étiquette utilisateur, dans un cas où l'attribut d'activité professionnelle **caractérisé par** la première étiquette utilisateur a un même mot-clé en tant que type d'activité professionnelle **caractérisé par** l'étiquette de conférence, ou
la détermination d'un attribut de service **caractérisé par** la première étiquette utilisateur en tant que seconde étiquette utilisateur, dans un cas où l'attribut de service **caractérisé par** la première étiquette utilisateur a un même mot-clé en tant que type de conférence **caractérisé par** l'étiquette de conférence ;
dans lequel le module de filtrage (603) est en outre configuré pour filtrer, selon la seconde étiquette utilisateur, des informations utilisateur de participant dans un ensemble de candidats, pour obtenir de secondes informations utilisateur pour une recommandation de participant.

6. Appareil selon la revendication 5, comprenant en outre un premier module de traitement configuré pour :
réaliser une notation de degré de correspondance concernant la correspondance de corrélation entre l'étiquette de conférence et la seconde étiquette utilisateur, pour obtenir un premier résultat de notation ;
réorganiser, sur la base du premier résultat de notation, les secondes informations utilisateur, pour obtenir un premier résultat de classement ; et
afficher, selon le premier résultat de classement, les secondes informations utilisateur.

7. Appareil selon la revendication 6, dans lequel le premier module de traitement est en outre configuré pour :
obtenir, selon un degré de cohésion entre les secondes informations utilisateur et les premières informations utilisateur, une première valeur d'ajustement ;
ajuster, en fonction de la première valeur d'ajustement, la notation de degré de correspondance, pour obtenir un second résultat de notation ;
mettre à jour, sur la base du second résultat de notation, le premier résultat de classement, pour obtenir un second résultat de classement mis à jour ; et
afficher, selon le second résultat de classement, les secondes informations utilisateur.

8. Appareil selon la revendication 6 ou 7, dans lequel le premier module de traitement est en outre configuré pour :
obtenir, selon une conférence historique à laquelle participent conjointement les secondes informations utilisateur et les premières informations utilisateur, une seconde valeur d'ajustement ;
ajuster, en fonction de la seconde valeur d'ajustement, la notation de degré de correspondance, pour obtenir un second résultat de notation ;
mettre à jour, sur la base du second résultat de notation, le premier résultat de classement, pour obtenir un second résultat de classement mis à jour ; et
afficher, selon le second résultat de classement, les secondes informations utilisateur.

9. Support de stockage non transitoire lisible par ordinateur stockant une instruction d'ordinateur sur celui-ci, dans lequel l'instruction d'ordinateur est utilisée pour amener un ordinateur à exécuter le procédé selon l'une quelconque des revendications 1 à 4.

10. Produit programme d'ordinateur comprenant un programme d'ordinateur, dans lequel le programme d'ordinateur met en œuvre le procédé selon l'une quelconque des revendications 1 à 4, lorsqu'il est exécuté par un processeur.
